(19) Europäisches Patentamt
European Patent Office
Office européen des brevets

(11) **EP 2 655 812 B1**

(12) **EUROPEAN PATENT SPECIFICATION**

(45) Date of publication and mention of the grant of the patent:
**22.06.2016 Bulletin 2016/25**

(21) Application number: **11808189.2**

(22) Date of filing: **20.12.2011**

(51) Int Cl.:
**F01K 23/06** (2006.01)      **F25J 3/04** (2006.01)

(86) International application number:
**PCT/EP2011/073353**

(87) International publication number:
**WO 2012/084910 (28.06.2012 Gazette 2012/26)**

(54) **INTEGRATED GASIFICATION COMBINED CYCLE APPARATUS INCORPORATING AN AIR SEPARATION APPARATUS**

GUD-PROZESSANLAGE MIT INTEGRIERTER KOHLEVERGASUNG MIT EINEM LUFTABSCHEIDER

APPAREIL À CYCLE COMBINÉ À GAZÉIFICATION INTÉGRÉE QUI INCORPORE UN APPAREIL DE SÉPARATION D'AIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2010   JP 2010283295**

(43) Date of publication of application:
**30.10.2013   Bulletin 2013/44**

(73) Proprietor: **L'Air Liquide Société Anonyme pour l'Etude et l'Exploitation des Procédés Georges Claude 75007 Paris (FR)**

(72) Inventors:
 • **NAKASUJI, Kensuke**
   **Kobe-shi**
   **Hyogo 655-0034 (JP)**
 • **NAKAMURA, Kouhei**
   **Kobe city**
   **Hyogo-pref 658-0053 (JP)**

(74) Representative: **Mercey, Fiona Susan L'AIR LIQUIDE, SOCIETE ANONYME POUR L'ETUDE ET L'EXPLOITATION DES PROCEDES GEORGES CLAUDE 75 quai d'Orsay 75321 Paris Cédex 07 (FR)**

(56) References cited:
CA-A1- 2 081 189      DE-C1- 4 107 109
US-A- 4 697 415       US-A- 5 081 845
US-A- 5 410 869       US-A1- 2007 181 854

**Description**

The present invention is related to an integrated gasification combined cycle apparatus and process using an air separation apparatus, such for example as a cryogenic distillation method nitrogen gas production apparatus and an air separation process.taking place within an integrated gasification combined cycle system.

Integrated gasification combined cycle systems using gasified gas from gasification furnace facilities have been commonly used conventionally. Such systems use nitrogen gas for various purposes inside the furnace including the carrier path for gasification materials, and since the demand for nitrogen gas is strong, such nitrogen production apparatus, for example, as those using the cryogenic distillation method, air separation plant and PSA (pressure swing method) have commonly been used. In these nitrogen production apparatuses, air is used as the main ingredient to produce nitrogen gas and liquid nitrogen via the compression and purification processes. Moreover, these gasification furnaces require gasified oxygen or air as the gasification agent, but since they require specified pressures, a separate oxygen gas production facility with high energy efficiency is being used.

For example, an integrated coal gasification combined cycle system (IGCC), as shown in Figure 6 (A) and (B), that uses a nitrogen production apparatus is described in JP-A-07286505.

More specifically, in an integrated coal gasification combined cycle system equipped with gasification furnace 101, gas cooler 102, gas purification device 103, gas turbine 105, waste gas boiler 107, steam turbine 106 and inert gas compressor device 112, gas turbine 105 and steam turbine drive power generator 109 to generate power, and the pressurized inert gas 114 is introduced as the cooling medium into gas cooler 102 to perform thermal exchange, and the pressurized inert gas 114 is introduced to gas turbine 105 via combustor 104. This configuration that supplies oxygen using a method of so called oxygen injection or air injection as the gasification agent at gasification furnace 101 has been disclosed.

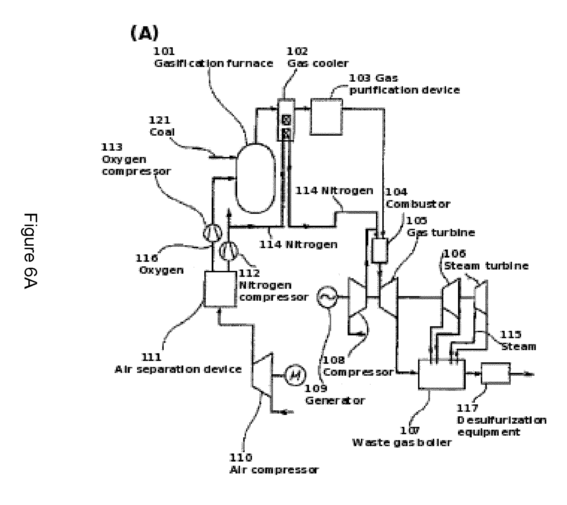

Here, an example of the so-called oxygen injection gasification furnace as shown in Figure 6 (A) is first explained. Coal (generally pulverized coal) 121 introduced to gasification furnace 101 is gasified in high-temperature and strongly reducing atmosphere by oxygen 116, which is smaller than the theoretical combustion oxygen amount that has been separated via air separation device 111 from the air supplied by air compressor 110, and pressurized by oxygen compressor 113, and then discharged from gasification furnace 101 at a high-temperature and high-pressure state.

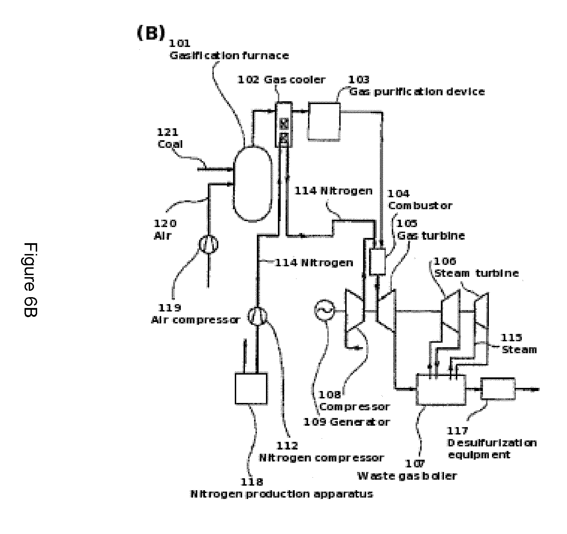

Figure 6 (B) shows a case of gasification furnace 101 with the so-called air injection method in which atmosphere is pressurized by air compressor 119 and supplied to gasification furnace 101 to gasify coal 121. It is not equipped with air separation device 111 as seen above, but instead uses a part of nitrogen 114 from nitrogen production device 118 as the cooling medium for gas cooler 102. In this case too, it is completely the same in terms of the process of using the sensible heat of nitrogen 114 that has been heat-recovered from gas cooler 102 and first utilized in gas turbine 105, and then converted to steam in waste gas boiler 107 to be used in steam turbine 106 and 106'.

Both documents US-A-5410869 and DE 4107109 C1 describe an apparatus according to the preamble of Claim 1.

According to an aspect of the invention, there is provided an integrated gasification combined cycle apparatus comprising an air separation apparatus, a gasification furnace facility, a gas purification facility and a combined cycle facility, means for producing nitrogen gas that is supplied and used in said gasification furnace facility and/or gas purification facility and means for producing an oxygen enriched gas which is mixed with air and sent to a compressor to form a gasification stream feeding the gasification furnace and characterized in that it comprises means for mixing the oxygen enriched gas with air upstream of the compressor.

According to other optional aspects:

- the purity and flow rate of the oxygen enriched gas are chosen such that the gasification stream introduced to the aforementioned gasification furnace contains between 22% and 35% mol. oxygen,
- the apparatus comprises a purification tower that separates nitrogen with the cryogenic distillation method, a top condenser and a heat exchanger that cools the air down to near its liquefaction temperature, and means for introducing vaporized gas from the top condenser to the aforementioned heat exchanger to use it as oxygen enriched gas.

Oxygen enriched gas can be mixed with air by a mixer or an ejector that uses air as the suction fluid.

An integrated gasification combined cycle apparatus, may comprise means for sending gas, supplied from the aforementioned gasification furnace, as combustion gas to a gas combustion device in the combined cycle facility, means for dividing the compressed gas pressurized by the compressor in two, means for introducing one part is introduced to the gas combustion device and another part as the gasification agent into the gasification furnace.

The compressor is preferably coupled to a turbine of the gas combustion facility.

According to a further aspect of the invention, there is provided an air separation process taking place within of an integrated gasification combined cycle system comprising a gasification furnace facility, a gas purification facility and a combined cycle facility, and which produces nitrogen gas that is supplied and used in said gasification furnace facility and/or gas purification facility and in that it produces an oxygen enriched gas which is sent to a compressor to form a gasification stream feeding the gasification furnace characterized in that the oxygen enriched gas is mixed with air upstream of the compressor.

The purity and flow rate of the oxygen enriched gas are preferably chosen such that the gasification stream introduced to the aforementioned gasification furnace contains between 22% and 35% mol. oxygen.

Air is preferably separated in a cryogenic purification tower by distillation to produce nitrogen and wherein oxygen enriched gas is removed from a top condenser of the tower and warmed in a heat exchanger that cools the air down to near its liquefaction temperature, to form oxygen enriched gas.

According to a further aspect of the invention, there is provided an integrated gasification combined cycle process comprising a gasification furnace facility, gas purification facility, and combined cycle facility, using the air separation process, and wherein nitrogen gas from the air separation process is sent to the gasification furnace facility and/or gas purification facility, and oxygen enriched gas resulting from the air separation process is sent to a compressor, forming part of the gasification furnace facility to be compressed with air, the compressed mixture being sent as a gasification agent to the gasification furnace .

Preferably gas supplied from the aforementioned gasification furnace is introduced as combustion gas to a gas combustion device in the combined cycle facility, the compressed gas pressurized by the compressor is divided in two and one part is introduced to the gas combustion device and another part is used as the gasification agent in gasification furnace.

The compressor is preferably driven using a turbine of the gas combustion facility.

In one variant, all the gas compressed in the compressor is sent to the gasification furnace.

The oxygen enriched gas contains more than 35% mol. oxygen, preferably at least 55% mol. oxygen.

With the nitrogen production apparatus and the integrated gasification combined cycle system using said nitrogen production apparatus as described above, however, the following various problems have occurred at times.

(i) In the oxygen injection IGCC system described above, it is necessary to highly pressurize the oxygen gas from the air separation device to inject it into the IGCC. In order to supply such high pressure oxygen, gas contact materials and costly oxygen compression device equipped with safety measures become necessary.

(ii) In the air injection IGCC system, on the other hand, air that is pressurized to approximately 2 ~ 5 MPa is generally supplied and the oxygen compressor is not needed, but the combustion efficiency at the gasification furnace is inferior compared to the oxygen injection IGCC system, and the problem of improving its combustion efficiency has yet to be solved.

(iii) Moreover, as is well known, operating with and handling oxygen with high combustion assisting property is legally or practically subject to specific restrictions. Handling oxygen concentration higher than that of the air is also restricted, and it is required that the restrictive condition for the oxygen gas supplied is satisfied as the oxygen purity allowable range for air compressor stipulated by JIGA (Japanese Industrial Gas Association) or EIGA (European Industrial Gas Association) (lower than 35%; hereinafter referred to as "EIGA allowable range") is applied to the object fluid to be compressed and supplied as gasified agent.

The object of the present invention is to provide a nitrogen production apparatus that is capable of efficiently supplying nitrogen and oxygen that are required for an integrated gasification combined cycle system in conditions that are suited to the operational state and an integrated gasification combined cycle system using the nitrogen production apparatus with high energy efficiency as the entire system.

In view of the above-described problems, the present inventors conducted intensive research and discovered that the aim can be reached by means of the nitrogen production apparatus and an integrated gasification combined cycle system using the nitrogen production apparatus described below.

The present invention is a nitrogen production apparatus that constitutes a part of an integrated gasification combined cycle system, and characterized in that it produces nitrogen gas that is supplied and used in said gasification furnace facility and gas purification facility using air as its source material, supplies oxygen-rich waste gas produced by extracting nitrogen gas from said material air to the primary side of the compressor installed at the aforementioned gasification furnace facility to compress air, and introduces it as part of the gasification agent for the aforementioned gasification furnace after it is compressed with air in said compressor.

The problems in conventional integrated gasification combined cycle systems as described previously could not be eliminated with configurations based on integrated technological concepts since the integrated gasification combined cycle system and the nitrogen (oxygen) production apparatus have been configured separately based individually on each of their requirements and specifications. The present invention provides a configuration for a nitrogen production apparatus in an integrated gasification combined cycle system with the greatest energy efficiency and operability as a result of verifying the optimal range of oxygen concentration in the gasification agent based on such gas property as the temperature condition, pressure condition and flow rate condition for the nitrogen gas and oxygen-rich waste gas that can be supplied from the nitrogen production apparatus in the integrated gasification combined cycle system that uses nitrogen gas as its main operation gas (referred hereinafter as "processing gas"). More specifically, it is possible to supply nitrogen gas with the desired pressure to such facilities as the gasification furnace and gas purification facility, and at the same time introduce compressed oxygen-rich gasification agent to the gasification furnace while keeping the oxygen concentration within the allowable range of the above-mentioned EIGA by supplying low-pressure waste gas to the primary side of the compressor (referred hereinafter as "air compressor") for compressing air. As described above, it has become possible to provide a nitrogen production apparatus that can supply the desired nitrogen and oxygen efficiently and in conditions that suit the operational condition, and configure a highly energy efficient integrated gasification combined cycle system.

The present invention is the above-mentioned nitrogen gas supply device characterized in that the flow rate of the waste gas supplied to the primary side of the aforementioned compressor is controlled so that the oxygen concentration in the gasification agent introduced to the aforementioned gasification furnace is approximately 22 ~ 35%.

When supplying the gasification agent under a pressurized condition, the present invention keeps the oxygen concentration in the gasification agent within the above-mentioned EIGA allowable range due to the configuration that controls the flow rate of the oxygen-rich waste gas supplied as part of the gasification agent, and at the same time makes it possible to perform efficient gasification process that leads to improvement in combustion efficiency and lower the burden on the air compressor. Furthermore, the lowering of the burden on the air compressor also allows selection of a low cost air compressor and reduces burden on the material of each part in the flow path.

The present invention is the above-mentioned nitrogen gas production apparatus characterized in that it is equipped with a purification tower that purifies the material air and separates nitrogen with the cryogenic distillation method, and a heat exchanger that cools the material air down to near its liquefaction temperature, and introduces the return gas from the aforementioned purification tower to the aforementioned heat exchanger to use it as the aforementioned oxygen-rich waste gas.

In the air separation device with the cryogenic distillation method using the purification tower, it is possible even with the relatively simple single tower type to continually supply nitrogen gas with the desired pressure, and at the same time continually extract nearly ambient pressure oxygen-rich waste gas with almost constant oxygen concentration. That is, this configuration as described above is capable of supplying nitrogen and oxygen required to form a highly energy efficient integrated gasification combined cycle system in conditions suited to the operational condition, and not only enables efficient use of the nitrogen gas production apparatus, but also establishes efficient use of the entire integrated gasification combined cycle system.

The present invention is also an integrated gasification combined cycle system comprising a gasification furnace facility, gas purification facility, and combined cycle facility, using any of the above-mentioned nitrogen gas production apparatuses, and characterized in that nitrogen gas from the aforementioned nitrogen production apparatus is supplied to the aforementioned gasification furnace facility and gas purification facility, and at the same time oxygen-rich waste gas resulting from extracting the aforementioned nitrogen gas from the material air is pressurized by the air compressor installed in the aforementioned gasification furnace facility and then introduced as part of the gasification agent to be introduced to the aforementioned gasification furnace to the primary side of said air compressor.

With this configuration as described above, it has become possible to use oxygen-rich waste gas as an oxygen concentration adjustment agent to produce a gasification agent with optimal concentration, and at the same time provide a highly energy efficient integrated gasification combined cycle system without the necessity of adding special components and special operation.

The present invention is the above-mentioned integrated gasification combined cycle system and characterized in that the aforementioned waste gas is mixed with air by a mixer or an ejector that uses said air as the suction fluid.

In order to produce a gasification agent with optimal concentration, it is necessary to secure a quantitative consistency in air and waste gas to mix with the air. The present invention makes it possible to form a gasification agent with a consistent oxygen concentration by installing a mixer or an ejector at the primary side of the air compressor to sufficiently mix and supply the waste gas, and form an integrated gasification combined cycle system to perform efficient gasification process and combustion treatment of the gasification gas.

The present invention is also the above-mentioned integrated gasification combined cycle system characterized in that the gasified gas supplied from the aforementioned gasification furnace is introduced as combustion gas to a gas combustion device in the aforementioned combined cycle facility, the compressed gas pressurized by the aforementioned air compressor is diverged and introduced to the gas combustion device with one part as the aforementioned gasification agent and the other part as the combustion-assisting gas for the aforementioned gas combustion device.

In the integrated gasification combined cycle system, stable gasification treatment in the gasification furnace, and at the same time stable combustion treatment of the produced gasified gas in the gas combustion device of the combined cycle facility is also important to secure high energy efficiency. The present invention has made it possible to perform stable and highly efficient combustion treatment by supplying the compressed gas having the same composition as the gasification agent as the combustion-assisting gas in the combustion treatment in the gas combustion device.

Brief explanation of Drawings

Figure 1 is a schematic illustration of the basic configuration example of the inventive integrated gasification combined cycle system.

Figure 2 is a schematic illustration of a configuration example of the inventive nitrogen production apparatus.

Figure 3 is a schematic illustration of another configuration example of the inventive nitrogen production apparatus.

Figure 4 is a schematic illustration of the configuration example no.2 of the inventive integrated gasification combined cycle system.

Figure 5 is a schematic illustration of the configuration example no.3 of the inventive integrated gasification combined cycle system.

Figure 6 is a schematic illustration of a configuration example of a integrated gasification combined cycle system with conventional technology.

Optimal configuration for implementing this invention

The nitrogen production apparatus (referred hereinafter as "the inventive apparatus") of the present invention constitutes a part of the integrated gasification combined cycle system (referred hereinafter as "the inventive system") that comprises a gasification furnace, a gas purification facility and a combined cycle facility, and is characterized in that it produces and supplies nitrogen gas used in said gasification furnace and gas purification facility using air as material, supplies oxygen-rich waste gas resulting from extracting nitrogen gas from said material air to the primary side of the air compressor installed at the gasification furnace facility, and introduce it as part of the gasification agent for the aforementioned gasification furnace after being pressurized with air by said compressor. Hereafter, the embodiments of the present invention will be described using the IGCC as an example on the basis of the drawings.

Basic Configuration Example of the Inventive system

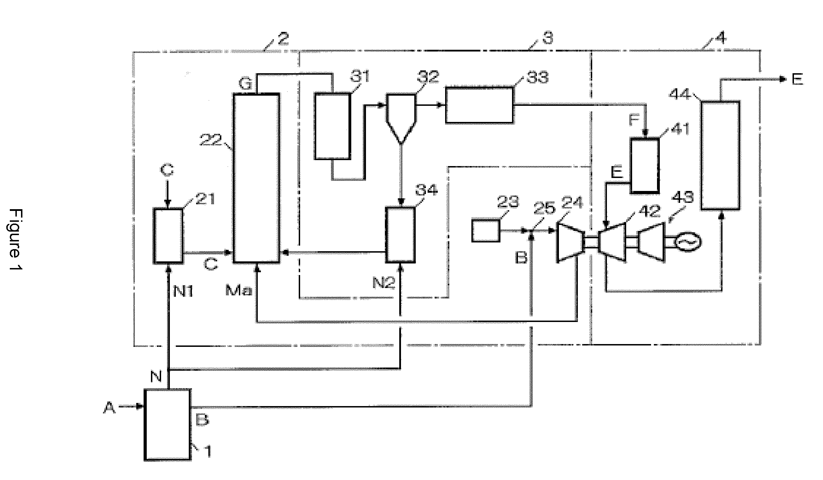

A schematic basic configuration example of the inventive system that uses nitrogen gas and oxygen gas from the inventive apparatus is shown in Figure 1 (Configuration Example 1). The inventive system is composed of air separation apparatus apparatus 1 that supplies nitrogen gas N and oxygen-rich waste gas B from material air A, gasification furnace facility 2 into which gasification material (coal in the case of IGCC) C, gasification agent Ma and operation gas N1 are introduced and that supplies gasified gas G, gas purification facility 3 into which gasified gas G is introduced and that supplies fuel gas F that has been cooled, dust-removed and purified, and combined cycle system 4 into which fuel gas F and combustion-assisting gas (not shown in Figure) are introduced and that converts energy generated by combustion reaction into electricity.

Inventive apparatus 1 takes in material air A and supplies nitrogen gas N that is pressurized by nitrogen gas compressor (not shown in Figure) if necessary to the desired pressure (e.g. 2 ~ 5 MPa) and oxygen-rich waste gas B with low pressure (generally ambient pressure level). Nitrogen gas N supplied from inventive apparatus 1 is used as operation gas N1 at gasification furnace facility 2 and as operation gas N2 at gas purification facility 3, and waste gas B is supplied to the primary side of air compressor 24 in gasification furnace facility and used as part of gasification agent Ma. Details on the configuration of inventive apparatus 1 will be provided later. It is also possible to produce nitrogen gas N using a heat exchanger (not shown in Figure) after liquid nitrogen produced by the cryogenic distillation method is pressurized with a pump (not shown in Figure).

Gasification furnace facility

Gasification furnace facility 2 comprises material supply device 21 into which gasification material C and operation gas N1 are introduced and that supplies gasification material C, gasification furnace 22 into which gasification material C and gasification agent Ma are introduced and that supplies gasified gas G, and air compressor 24 where waste gas B supplied from inventive apparatus 1 is added to the air purified via filter 23, then mixed with gasification agent Ma that is introduced, and pressurizes and supplies the mixture to gasification furnace 22. Gasification material C that is agitated and dispersion-treated into a state that is easily susceptible to chemical reaction is transferred and introduced safely and smoothly to gasification furnace 22. At this time, the gasification reaction is promoted by preheating in an oxygen-free atmosphere in gasification furnace 22. In gasification furnace 22, gasified gas G containing carbon monoxide (CO) and hydrogen ($H_2O$) is produced by having carbon components or oxygenated hydrocarbon components contained in gasification material C react with oxygen contained in gasification agent Ma. At this time, as with IGCC, in cases there is residue R containing unreacted carbon and hydrocarbon, such as char, it is desirable to reflux it to gasification furnace 22 to perform re-reaction. In gasification furnace 22, it is desirable to install a temperature control sensor and if necessary a concentration control sensor (not shown in Figure) that can control either $H_2O$, CO or $H_2O$, or multiple components such as residual oxygen.

As for gasification material C, other than coal, petroleum heavy residue, biomass or tire chips can be used. When introducing it to gasification furnace 22, or temporary strong it before introduction, it is desirable to apply carrier treatment or atmospheric treatment using inert gas as the treatment gas. In cases the contact time with the treatment gas is large; it is possible to prevent the risk of generating such components as highly reactive gasified gas as the reaction is promoted by the reaction heat generated by partial reaction (reaction heat) of gasification material C in addition to improving the efficiency of such processes as the carrier treatment. As for the operation gas N1, nitrogen gas N from inventive apparatus 1 is used. The introduction amount and supply pressure of operation gas N1 are adjusted by the supply rate and property of gasification material C or the capacity of material supply device 21.

The pressure and flow rate of gasification agent Ma introduced to gasification furnace 22 are adjusted by air compressor 24. Here, it is desirable that the oxygen concentration of gasification agent Ma is approximately 22 ~ 35%. To lower the supply pressure and raise the gasification reaction rate of gasification agent Ma, it is desirable that the oxygen concentration is high, but the higher the oxygen concentration, the larger the load of air compressor 24 becomes as well. Also from the allowable range of EIGA as stated previously, it is preferable that the concentration is 35% or lower. Moreover, it is desirable that its concentration is approximately 22% or higher than the oxygen concentration control range for the gasification reaction that accompanies such factors as the compositional variability of gasification material C. Gasification agent Ma with high concentration of oxygen is produced at merging point 25 at the primary side of air compressor 24 as waste gas B supplied from inventive apparatus 1 is added and mixed with air purified via filter 23. Here, it is possible to improve the homogeneity of waste gas B by using a mixer (not shown in Figure) instead of merging point 25. As it is added at a state of ambient pressure, it reduces the load of air compressor 24 and at the same time reduces the load on the supply side of waste gas B of inventive apparatus 1. Moreover, lowering of the supply pressure by the supply of high-concentration oxygen reduces the load on air compressor 24 and at the same time allows selection of further low-cost air compressor 24 and reduces load on the material of each part of the flow path.

Gas purification facility

Gas purification facility 3 comprises cooling device 31 that cools gasified gas G supplied from gasification furnace 22, dust removing device 32 that removes dust in gasified gas G, and purification device 33 that separates and removes such components as tar components and $CO_2$ Gasified gas G is purified and supplied to combined cycle facility 4 as fuel gas F. Since unreacted high boiling point carbon and hydrocarbon, such as char and tar, are contained in residue R separated in dust removing device 32, it is refluxed to gasification furnace 22 via hopper 34. At this time, nitrogen gas N from inventive apparatus 1 is introduced to hopper 34 as operation gas N2 and used for agitation treatment and carrier treatment. The introduction amount and supply pressure of operation gas N2 are adjusted by the supply amount and property of gasification material C. Since it is introduced to gasification furnace 22, as with operation gas N1, and both can be supplied at the same pressure, they can both be supplied commonly from inventive apparatus 1. Moreover, such substances as iron oxide adsorption agent and MDEA (methyldiethanolamine) are filled inside purification device 33.

Combined cycle facility

Combined cycle facility 4 comprises combustion device 41 into which fuel gas and combustion assisting gas (not shown in Figure) supplied from purification device 33 are introduced and that supplies combustion waste gas E generated by the combustion reaction, gas turbine 42 into which combustion waste gas E is introduced and that drives the turbine, generator 43 that is connected to gas turbine 42 and converts combustion energy from driving the turbine into electricity, and waste gas boiler 44 into which combustion waste gas E supplied from gas turbine 42 is introduced and that is used for such purposes as generating steam. High-temperature and high-pressure combustion energy generated in combustion device 41 is efficiently converted to power-generating energy. The waste gas used for generating steam in waste gas boiler 44 is applied with necessary treatment and discharged into atmosphere.

Configuration example of the inventive apparatus

As to inventive apparatus 1 used in the inventive system, the cryogenic distillation method with a purification tower, the PSA type or TSA type with a molecular sieve, or the separation membrane type using a polymer membrane module can be used. Since oxygen-free nitrogen gas or an equivalent is desired as operation gas N1 and N2, the inventive system is configured by using such nitrogen gas production devices. At this time, it is desirable to measure the oxygen concentration in nitrogen gas N or the waste gas supplied from inventive apparatus 1, and also adjust the supply pressure and supply flow rate by installing a built-in regulator valve and/or a flow meter.

(1) Cryogenic distillation method nitrogen gas production apparatus with purification tower

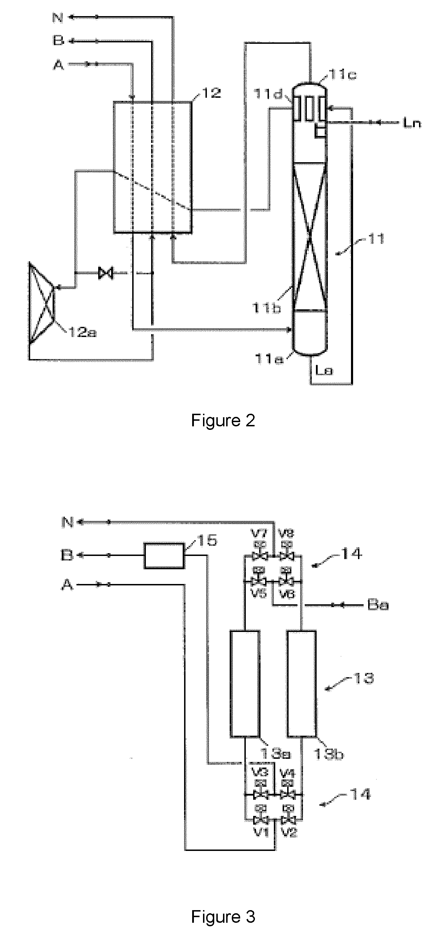

Figure 2 shows a schematic first embodiment of a process according to the invention using a cryogenic distillation apparatus 1 using a purification tower. Inventive apparatus 1 comprises purification tower 11 that purifies material air A and separates nitrogen gas N with the cryogenic distillation method, and heat exchanger 12 that cools material air A to near its liquefaction temperature. More specifically, material air A that has bee liquefied at low temperature by heat exchanger 12 is introduced to tower lower section 11 a of purification tower 11, and purified at its purification section 11 b due to the difference in boiling points to produce nitrogen gas N. Low-temperature nitrogen gas N supplied from tower top section 11c of purification tower 11 is heated by heat exchanger 12 and supplied out with a pressure of approximately 0.5 ~ 1.2 MPa. Even with a relatively simple single tower type, it is possible to continually supply nitrogen gas N with the desired pressure.

Liquid air La that has become oxygen rich at tower lower section 11a is introduced to condenser 11 d as part of the cooling source and a part of it is also gasified and then heated by heat exchanger 12, and supplied as waste gas B. It is possible to continually extract waste gas B with almost constant oxygen concentration and nearly ambient pressure. At this time, oxygen-rich waste gas B discharged from condenser 11 d is further introduced to expansion turbine 12a, used as a cooling medium at main heat exchanger 12, and then discharged outside the system. This allows it to function as supplement to the cooling source for nitrogen gas N. Moreover, as needed, liquefied nitrogen Ln with the desired pressure is introduced to purification section 11c. This allows supplementing the material to correspond with the required amount of nitrogen gas N, and at the same time functions as a supplement to the cooling source for condenser 11d. It is possible to supply the required amount of nitrogen and oxygen in conditions suited to their operational usage.

(2) PSA type nitrogen gas production apparatus with molecular sieve

Figure 3 shows a schematic configuration example of a PSA type inventive apparatus 1 using a molecular sieve. Inventive apparatus 1 comprises adsorption tower unit equipped with two adsorption towers 13a and 13b filled with adsorption agent that selectively adsorbs oxygen in material air A, switching unit 14 equipped with on-off valves V1 ~ V4 that allows switching the supply of material air A, and on-off valves V5 ~ V8 that allows switching the supply of recycled gas Ba to adsorption towers 13a and 13b, and buffer tank 15 installed at the supply flow path of waste gas Ba. It has the function to supply pressurized material air A and nitrogen gas with the desired pressure to one of the towers with low temperature, and at the same time the function to supply recycled gas and oxygen-rich waste gas with ambient pressure level to the other adsorption tower with high temperature. Moreover, it is possible to make the oxygen concentration even and lower the temperature of waste gas B by introducing waste gas B to tank 15 with the desired capacity and storing it temporarily.

As for the adsorption agent, such items as the molecular sieves carbon (MSC) that has high selective oxygen adsorption ability are used. By taking advantage of the difference in the adsorption speeds due to the sizes of the molecules - nitrogen (4.2 x 3.0 Å) and oxygen (3.8 x 2.8 Å) - with adsorption agents that have the molecular sieve function as with MSC, nitrogen gas and oxygen gas can be separated. That is, when mixed gas of oxygen gas and nitrogen gas is introduced to adsorption towers 13a and 13b, the nitrogen gas and oxygen gas are separated in a short time (1 ~ 2 minutes) at an early stage of adsorption since the difference between their adsorption speeds is large. Especially when pressurized mixed gas is introduced to adsorption towers 13a and 13b, oxygen with smaller molecules is first adsorbed and most of the nitrogen passes through. On the other hand, when the pressure of adsorption towers 13a and 13b that have adsorbed oxygen is lowered, the adsorbed oxygen is released. By repeating this process of adsorption by increasing the pressure and release by decreasing the pressure in adsorption towers 13a and 13b filled with adsorption agent that has the molecular sieve function, it is possible to continually separate nitrogen gas and oxygen gas.

More specifically, by opening on-off valves V1 and V7, and closing on-off valves V3 and V5, it is possible to introduce material air A to one of the adsorption towers (13a for example), selectively remove oxygen in the pressurized material air A with the adsorption agent in adsorption tower 13a, and extract nitrogen gas N. At the same time, by opening on-off valves V4 and V6, and closing on-off valves V2 and V8, it is possible to introduce recycled gas Ba to the other adsorption tower (13b for example), release oxygen from the adsorption agent in adsorption tower 13b, and take out oxygen-rich waste gas B. Moreover, by switching the operation of on-off valves V1 ~ V8 in reverse and creating an increased pressure state in adsorption tower 13b and a decreased pressure state in adsorption tower 13a, nitrogen gas and oxygen-rich waste gas B can be extracted similarly.

As described above, it is possible to maintain continually high removal efficiency and at the same time secure high removal efficiency using adsorption towers 13a and 13b with relatively small capacity by installing two adsorption towers 13a and 13b and alternately switching the two processes. As for recycled gas Ba, low-purity nitrogen gas or purified gas that has already been used in the inventive system and does not contain oxygen (for example combustion waste gas E that has been purified) is used. It is possible to supply the required nitrogen and oxygen in conditions that suit the operational state. Moreover, by adopting multiple adsorption towers and alternately switching their operation, it is possible to continually supply nitrogen and oxygen. It is also possible, instead of the above-mentioned inventive apparatus 1 that uses eight on-off valves V1 ~ V8, to use three-way switching valves or four-way switching valves to make it a more simple configuration.

Other configuration examples of the inventive system

The inventive system is based on the above-mentioned configuration example 1, and as it is possible to select from various configuration examples for inventive apparatus 1 as described above, it is also possible to adopt various applicative configuration examples regarding also gasification furnace facility 2, gas purification facility 3 and combined cycle facility 4, and at the same various applications regarding the usage of waste gas B from inventive apparatus 1 are possible. As other configuration examples of the inventive system, configuration examples (configuration examples 2 and 3) of which one is characterized in that it is related to production of gasification agent Ma, and the other is characterized in that it relates to the use of combustion-assisting gas Mb in combustion device 41, are described below.

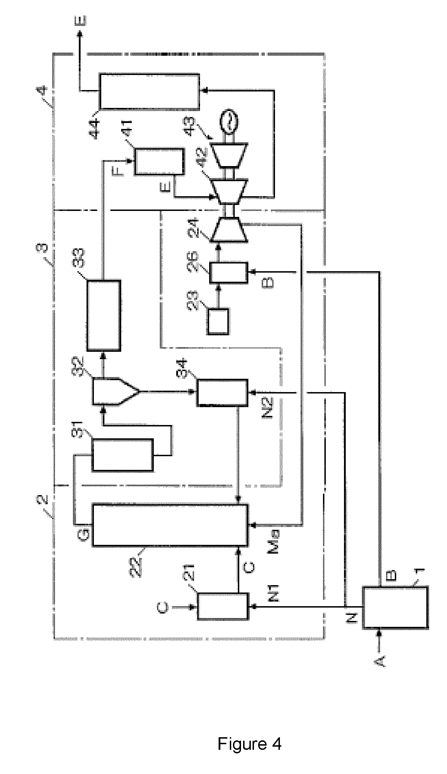

(1) Figure 4 shows a second embodiment of the inventive system. The inventive system is characterized in that ejector 26 that uses air as the suction fluid is installed in merging point 25 of gasification furnace facility 2 of Figure 1 described above. By using the constant-pressure suction function or a swift mixing function of ejector 26, it is possible to secure a quantitative capability of air and the waste gas to be mixed with the air, and produce a gasification agent with optimal concentration stably. Especially by installing ejector 26 in the decompression flow path on the primary side of air compressor 24, stable suction at a constant flow rate can be performed without the influence of external load fluctuation against waste gas B supplied at constant pressure from inventive apparatus 1. Therefore, it is possible to consistently form gas with a stable and uniform oxygen concentration as the mixed gasification agent Ma in addition to the suction function of air with a constant flow rate by ejector 26.

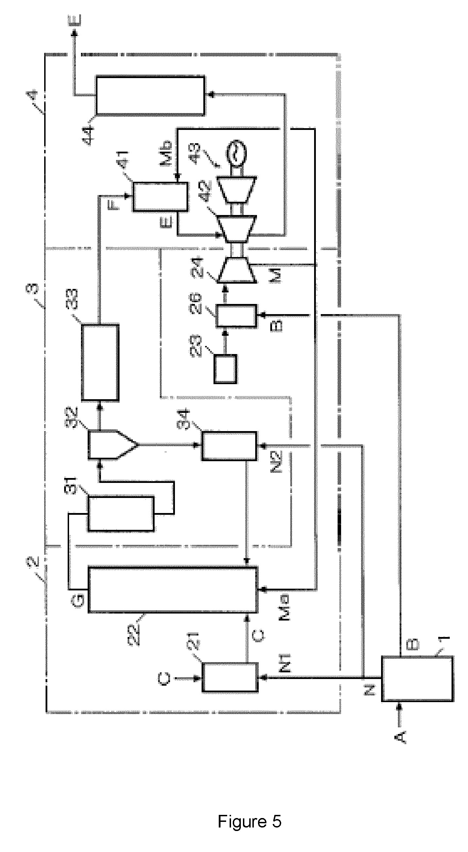

(2) Figure 5 shows a third embodiment of the inventive system. The inventive system is characterized in that compression gas M pressurized by air compressor 24 is diverged so that one part is supplied to gasification furnace 22 as gasification agent Ma, and the other part is supplied to gas combustion device 41 as combustion-assisting gas Ma of gas combustion device 41. This is also applicable to configuration examples 1 and 2 described above. By supplying compressed gas M having the same composition as gasification agent Ma as combustion-assisting gas Mb for combustion treatment at gas combustion device 41, it is possible to apply it also for the combustion reaction at combined cycle facility 4 of the inventive system to improve the power generation efficiency due to high combustion efficiency.

Verification of the condition of using nitrogen gas N

Here, verification of the mutual quantitative relationship between the supply rate of nitrogen gas N and gasification agent Ma as well as combustion-assisting gas Mb is provided. Since the amounts of water and argon are minute, they are approximated as 0 (zero), and nitrogen gas N is assumed to be pure nitrogen. Bellow is the result of verification under the condition that waste gas B can be supplied as part of combustion-assisting gas Mb. Since supply amount b of oxygen-rich waste gas B from inventive apparatus 1 is the remainder of introduction amount a (code "a") of material air A minus supply amount c of nitrogen gas N, the following equations 1 ~ 3 can be established from the balance of nitrogen component and oxygen component in the event, for example, waste gas B contains 60% oxygen.

$$a * 0.79 = c + b * 0.40 \qquad \text{(Equation 1)}$$

$$a * 0.21 = b * 0.60 \qquad \text{(Equation 2)}$$

$$b \fallingdotseq c * 0.54 \qquad \text{(Equation 3)}$$

That is, it is possible to supply 54% of the supply amount of nitrogen gas N as Here, if supply amount b1 among production amount b of waste gas B is used as part of gasification agent Ma that is 35% of supply amount e that is mixed with suction amount d of air, the following equations 4 ~ 6 can be established

$$e * 0.65 = d * 0.79 + b1 * 0.40 \qquad \text{(Equation 4)}$$

$$e * 0.35 = d * 0.21 + b1 * 0.60 \qquad \text{(Equation 5)}$$

$$b1 \fallingdotseq e * 0.36 \qquad \text{(Equation 6)}$$

That is, approximately 36% of the amount of gasification agent Ma used becomes the amount of waste gas B used, and assuming that production amount b of waste gas B equals supply amount b1, the following equation 7 can be established.

$$e \fallingdotseq c * 1.50 \qquad \text{(Equation 7)}$$

That is, it is possible to supply an amount of gasification agent Ma that is approximately 150% of the amount of nitrogen gas production. Therefore, in cases the amount to be used as gasification agent Ma is smaller than that amount, waste gas B can be supplied as part of combustion-assisting gas Mb.

Industrial Applicability

The implementation configurations of the present invention regarding the integrated gasification combined cycle system that uses gasification gas from the gasification furnace facility as the fuel, using IGCC as an example, are described above, but the present invention is not limited to those configurations provided above, and can also be used in such processes as chemical processes and various treatment furnaces.

Explanation of codes

| | |
|---|---|
| 1 | Inventive apparatus |
| 2 | Gasification furnace facility |
| 21 | Material supply device |
| 22 | Gasification furnace |
| 23 | Filter |
| 24 | Air compressor |
| 25 | Merging point |
| 3 | Gas purification facility |
| 31 | Cooling device |
| 32 | Dust removing device |
| 33 | Purification device |
| 34 | Hopper |
| 4 | Combined cycle facility |
| 41 | Combustion device |
| 42 | Gas turbine |
| 43 | Generator |
| 44 | Waste gas boiler |
| A | Material air |
| B | Waste gas |
| C | Gasification material |
| E | combustion waste gas |
| F | Fuel gas |
| G | Gasification gas |
| Ma | Gasification agent |
| N | Nitrogen gas |
| N1, N2 | Operation gas |

R        Residue

**Claims**

1.  Integrated gasification combined cycle apparatus comprising an air separation apparatus (1), a gasification furnace facility (2), a gas purification facility (3) and a combined cycle facility (4), the air separation apparatus comprising means for producing nitrogen gas (N1, N2) that is supplied and used in said gasification furnace facility and/or gas purification facility and means for producing an oxygen enriched gas (B) which is sent to a compressor (24) to form a gasification stream feeding the gasification furnace and **characterized in that** it comprises means (25,26) for mixing the oxygen enriched gas with air upstream of the compressor.

2.  An apparatus in accordance with claim 1, **characterized in that** the purity and flow rate of the oxygen enriched gas are chosen such that the gasification stream introduced to the aforementioned gasification furnace contains between 22% and 35% mol. oxygen.

3.  An apparatus in accordance with claim 1 or claim 2, **characterized in that** the air separation apparatus (1) comprises a purification tower (11) that purifies the air and separates nitrogen with the cryogenic distillation method, a top condenser (11 d) and a heat exchanger (12) that cools the air down to near its liquefaction temperature, and means for introducing vaporized gas from the top condenser to the aforementioned heat exchanger to use it as oxygen enriched gas (B).

4.  An integrated gasification combined cycle apparatus in accordance with any preceding claim, **characterized in that** the means for mixing oxygen enriched gas (B) with air is a mixer (25) or an ejector (26) that uses air as the suction fluid.

5.  An integrated gasification combined cycle apparatus in accordance with claim 4, comprises means for sending gas (F), supplied from the aforementioned gasification furnace, as combustion gas to a gas combustion device (41) in the combined cycle facility, means for dividing the compressed gas pressurized by the compressor (24) in two, means for introducing one part (Mb) to the gas combustion device and another part (Ma) as the gasification agent into the gasification furnace (22).

6.  Apparatus as claimed in any preceding claim wherein the compressor (24) is coupled to a turbine (42) of the gas combustion facility.

7.  An air separation process taking place within an integrated gasification combined cycle system comprising a gasification furnace facility (2), a gas purification facility (3) and a combined cycle facility (4), which produces nitrogen gas (N1, N2) that is supplied and used in said gasification furnace facility and/or gas purification facility and produces an oxygen enriched gas (B) which is sent to a compressor (24) to form a gasification stream feeding the gasification furnace **characterized in that** the oxygen enriched gas is mixed with air upstream of the compressor.

8.  A process in accordance with claim 7, **characterized in that** the purity and flow rate of the oxygen enriched gas are chosen such that the gasification stream introduced to the aforementioned gasification furnace contains between 22% and 35% mol. oxygen.

9.  A process in accordance with claim 7 or claim 8 wherein air is separated in a cryogenic purification tower (11) by distillation to produce nitrogen and wherein oxygen enriched gas is removed from a top condenser of the tower and warmed in a heat exchanger (12), that cools the air down to near its liquefaction temperature, to form oxygen enriched gas (B).

10. An integrated gasification combined cycle process comprising a gasification furnace facility (2), gas purification facility (3), and combined cycle facility (4), using the air separation process in accordance with any of claims 7 to 9, and wherein nitrogen gas from the air separation process is sent to the gasification furnace (2) facility and/or gas purification facility (3), and oxygen enriched gas (B) resulting from the air separation process is sent to a compressor (24), forming part of the gasification furnace facility to be compressed with air, the compressed mixture being sent as a gasification agent (Ma) to the gasification furnace (22).

11. An integrated gasification combined cycle process in accordance with claim 10, **characterized in that** gas (F) supplied from the aforementioned gasification furnace is introduced as combustion gas to a gas combustion device (41) in the combined cycle facility, the compressed gas pressurized by the compressor (24) is divided in two and one part (Mb) is introduced to the gas combustion device and another part (Ma) is used as the gasification agent in gasification furnace (22).

12. Process as claimed in claim 10 or 11 wherein the compressor (24) is driven using a turbine (42) of the gas combustion facility.

13. Process as claimed in any of claims 10 to 12 wherein all the gas compressed in the compressor is sent to the gasification furnace (22).

14. Process as claimed in any of claims 10 to 13 wherein the oxygen enriched gas (B) contains more than 35% mol. oxygen.

**Patentansprüche**

1. GuD-Prozessanlage mit integrierter Kohlevergasung, umfassend einen Luftabscheider (1), eine Vergasungsofenanlage (2), eine Gasreinigungsanlage (3) und eine GuD-Anlage (4), wobei der Luftabscheider Mittel zum Erzeugen von Stickstoffgas (N1, N2) umfasst, das der Vergasungsofenanlage und/oder Gasreinigungsanlage zugeführt wird und davon verwendet wird, und Mittel zum Erzeugen von sauerstoffangereichertem Gas (B), das zu einem Verdichter (24) zum Bilden eines Vergasungsstroms gesendet wird, der in den Vergasungsofen eingeleitet wird, und **dadurch gekennzeichnet, dass** sie Mittel (25, 26) zum Mischen des sauerstoffangereicherten Gases mit Luft stromaufwärts des Verdichters umfasst.

2. Anlage nach Anspruch 1, **dadurch gekennzeichnet, dass** die Reinheit und die Flussrate des sauerstoffangereicherten Gases derart ausgewählt sind, dass der Vergasungsstrom, der in den Vergasungsofen eingeführt wird, zwischen 22 Mol-% und 35 Mol-% Sauerstoff enthält.

3. Anlage nach Anspruch 1 oder 2, **dadurch gekennzeichnet, dass** der Luftabscheider (1) einen Reinigungsturm (11), der die Luft reinigt und Stickstoff mit dem kryogenen Destillationsverfahren abscheidet, einen oberen Kondensator (11 d) und einen Wärmetauscher (12), der die Luft auf nahezu ihre Verflüssigungstemperatur abkühlt, und Mittel zum Einführen von verdampftem Gas aus dem oberen Kondensator zu dem Wärmetauscher zum Verwenden davon als sauerstoffangereichertes Gas (B) umfasst.

4. GuD-Prozessanlage mit integrierter Kohlevergasung nach einem der vorhergehenden Ansprüche, **dadurch gekennzeichnet, dass** das Mittel zum Mischen von sauerstoffangereichertem Gas (B) mit Luft ein Mischer (25) oder eine Ausstoßvorrichtung (26) ist, die Luft als Ansaugfluid verwendet.

5. GuD-Prozessanlage mit integrierter Kohlevergasung nach Anspruch 4, die Mittel zum Senden von Gas (F), das aus dem Vergasungsofen zugeführt wird, als Brenngas zu einer Gasverbrennungsvorrichtung (41) in der GuD-Anlage, Mittel zum Teilen des von dem Verdichter (24) verdichteten Gases in zwei, Mittel zum Einführen eines Teils (Mb) in die Gasverbrennungsvorrichtung und eines anderen Teils (Ma) als Vergasungsmittel in den Vergasungsofen (22) umfasst.

6. Vorrichtung nach einem der vorhergehenden Ansprüche, wobei der Verdichter (24) mit einer Turbine (42) der Gasverbrennungsanlage gekoppelt ist.

7. Luftabscheidungsverfahren, das innerhalb einer GuD-Prozessanlage mit integrierter Kohlevergasung stattfindet, umfassend eine Vergasungsofenanlage (2), eine Gasreinigungsanlage (3) und eine GuD-Anlage (4), die Stickstoffgas (N1, N2) erzeugt, das der Vergasungsofenanlage und/oder Gasreinigungsanlage zugeführt und darin verwendet wird und ein sauerstoffangereichertes Gas (B) erzeugt, das zu einem Verdichter (24) gesendet wird, um einen Vergasungsstrom zu bilden, der in den Vergasungsofen eingeleitet wird, **dadurch gekennzeichnet, dass** das sauerstoffangereicherte Gas mit Luft stromaufwärts des Verdichters vermischt wird.

8. Prozess nach Anspruch 7, **dadurch gekennzeichnet, dass** die Reinheit und die Flussrate des sauerstoffangereicherten Gases derart ausgewählt sind, dass der Vergasungsstrom, der in den Vergasungsofen eingeführt wird, zwischen 22 Mol-% und 35 Mol-% Sauerstoff enthält.

**9.** Prozess nach Anspruch 7 oder Anspruch 8, wobei Luft in einem kryogenen Reinigungsturm (11) durch Destillation abgeschieden wird, um Stickstoff zu erzeugen, und wobei das sauerstoffangereicherte Gas aus einem oberen Kondensator des Turms entfernt wird und in einem Wärmetauscher (12) erwärmt wird, der die Luft auf nahezu ihre Verflüssigungstemperatur abkühlt, um sauerstoffangereichertes Gas (B) zu bilden.

**10.** GuD-Anlage mit integrierter Kohlevergasung, umfassend eine Vergasungsofenanlage (2), eine Gasreinigungsanlage (3) und eine GuD-Anlage (4), die das Luftabscheidungsverfahren nach einem der Ansprüche 7 bis 9 verwendet, wobei das Stickstoffgas aus dem Luftabscheidungsverfahren zur Vergasungsofenanlage (2) und/oder Gasreinigungsanlage (3) gesendet wird, und wobei das sauerstoffangereicherte Gas (B), das aus dem Luftabscheidungsverfahren resultiert, zu einem Verdichter (24) gesendet wird, der einen Teil der Vergasungsofenanlage bildet, um mit Luft verdichtet zu werden, wobei die verdichtete Mischung als Vergasungsmittel (Ma) zum Vergasungsofen (22) gesendet wird.

**11.** GuD-Verfahren mit integrierter Kohlevergasung nach Anspruch 10, **dadurch gekennzeichnet, dass** Gas (F), das aus dem Vergasungsofen als Brenngas zu einer Gasverbrennungsvorrichtung (41) in der GuD-Anlage zugeführt wird, wobei das von dem Verdichter (24) verdichtete Gas in zwei geteilt wird und ein Teil (Mb) in die Gasverbrennungsvorrichtung eingeführt wird und der andere Teil (Ma) als Vergasungsmittel im Vergasungsofen (22) verwendet wird.

**12.** Verfahren nach einem der Ansprüche 10 oder 11, wobei der Verdichter (24) mit einer Turbine (42) der Gasverbrennungsanlage angetrieben wird.

**13.** Verfahren nach einem der Ansprüche 10 bis 12, wobei das gesamte in dem Verdichter verdichtete Gas zum Vergasungsofen (22) gesendet wird.

**14.** Verfahren nach einem der Ansprüche 10 bis 13, wobei das sauerstoffangereicherte Gas (B) über 35 Mol-% Sauerstoff enthält.

## Revendications

**1.** Appareil de gazéification intégré à cycle combiné comprenant un appareil de séparation d'air (1), une installation de four de gazéification (2), une installation de purification de gaz (3) et une installation à cycle combiné (4), l'appareil de séparation d'air comprenant un moyen de production de gaz azote (N1, N2) qui est fourni et utilisé dans ladite installation de four de gazéification et/ou ladite installation de purification de gaz et un moyen de production de gaz enrichi en oxygène (B) qui est envoyé à un compresseur (24) pour former un courant de gazéification alimentant le four de gazéification et **caractérisé en ce qu'**il comprend un moyen (25, 26) de mélange du gaz enrichi en oxygène avec de l'air en amont du compresseur.

**2.** Appareil selon la revendication 1, **caractérisé en ce que** la pureté et le débit du gaz enrichi en oxygène sont choisis pour que le courant de gazéification introduit dans le four de gazéification susmentionné contienne entre 22 % et 35 % en mole d'oxygène.

**3.** Appareil selon la revendication 1 ou la revendication 2, **caractérisé en ce que**
l'appareil de séparation d'air (1) comprend une tour de purification (11) qui purifie l'air et sépare l'azote par la méthode de distillation cryogénique, un condenseur haut (11d) et un échangeur de chaleur (12) qui refroidit l'air jusque presque sa température de liquéfaction, et un moyen d'introduction de gaz vaporisé du condenseur haut à l'échangeur de chaleur susmentionné pour l'utiliser comme gaz enrichi en oxygène (B).

**4.** Appareil de gazéification intégré à cycle combiné selon l'une quelconque des revendications précédentes, **caractérisé en ce que** le moyen de mélange de gaz enrichi en oxygène (B) avec de l'air est un mélangeur (25) ou un éjecteur (26) qui utilise de l'air comme fluide d'aspiration.

**5.** Appareil de gazéification intégré à cycle combiné selon la revendication 4, comprenant un moyen d'envoi de gaz (F), fourni par le four de gazéification susmentionné, comme gaz de combustion à un dispositif de combustion de gaz (41) dans l'installation à cycle combiné, un moyen de division du gaz comprimé pressurisé par le compresseur (24) en deux, un moyen d'introduction d'une partie (Mb) dans le dispositif de combustion de gaz et d'une autre partie (Ma) en tant qu'agent de gazéification dans le four de gazéification (22).

**6.** Appareil selon l'une quelconque des revendications précédentes, dans lequel le compresseur (24) est couplé à une turbine (42) de l'installation de combustion de gaz.

**7.** Procédé de séparation d'air se déroulant au sein d'un système de gazéification intégré à cycle combiné comprenant une installation de four de gazéification (2), une installation de purification de gaz (3) et une installation à cycle combiné (4), qui produit du gaz azote (N1, N2) qui est fourni et utilisé dans ladite installation de four de gazéification et/ou ladite installation de purification de gaz et produit un gaz enrichi en oxygène (B) qui est envoyé à un compresseur (24) pour former un courant de gazéification alimentant le four de gazéification **caractérisé en ce que** le gaz enrichi en oxygène est mélangé avec de l'air en amont du compresseur.

**8.** Procédé selon la revendication 7, **caractérisé en ce que** la pureté et le débit du gaz enrichi en oxygène sont choisis pour que le courant de gazéification introduit dans le four de gazéification susmentionné contienne entre 22 % et 35 % en mole d'oxygène.

**9.** Procédé selon la revendication 7 ou la revendication 8, dans lequel de l'air est séparé dans une tour de purification cryogénique (11) par distillation pour produire de l'azote et dans lequel du gaz enrichi en oxygène est éliminé d'un condenseur haut de la tour et réchauffé dans un échangeur de chaleur (12), qui refroidit l'air jusqu'à sa température de liquéfaction, pour former un gaz enrichi en oxygène (B).

**10.** Procédé de gazéification intégré à cycle combiné comprenant une installation de four de gazéification (2), une installation de purification de gaz (3) et une installation à cycle combiné (4), utilisant le procédé de séparation d'air en conformité avec l'une quelconque des revendications 7 à 9, et dans lequel du gaz azote issu du procédé de séparation d'air est envoyé à l'installation de four de gazéification (2) et/ou l'installation de purification de gaz (3), et du gaz enrichi en oxygène (B) résultant du procédé de séparation d'air est envoyé à un compresseur (24), faisant partie de l'installation de four de gazéification à comprimer avec de l'air, le mélange comprimé étant envoyé en tant qu'agent de gazéification (Ma) au four de gazéification (22).

**11.** Procédé de gazéification intégré à cycle combiné selon la revendication 10, **caractérisé en ce que** le gaz (F) fourni par le four de gazéification susmentionné est introduit en tant que gaz de combustion dans un dispositif de combustion de gaz (41) dans l'installation de cycle combiné, le gaz comprimé pressurisé par le compresseur (24) est divisé en deux et une partie (Mb) est introduite dans le dispositif de combustion de gaz et une autre partie (Ma) est utilisée comme agent de gazéification dans le four de gazéification (22).

**12.** Procédé selon la revendication 10 ou 11, dans lequel le compresseur (24) est entraîné à l'aide d'une turbine (42) de l'installation de combustion de gaz.

**13.** Procédé selon l'une quelconque des revendications 10 à 12, dans lequel tout le gaz comprimé dans le compresseur est envoyé au four de gazéification (22).

**14.** Procédé selon l'une quelconque des revendications 10 à 13, dans lequel le gaz enrichi en oxygène (B) contient plus de 35 % en mole d'oxygène.

Figure 1

Figure 2

Figure 3

Figure 4

EP 2 655 812 B1

16

Figure 5

Figure 6A

Figure 6B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 07286505 A
- US 5410869 A
- DE 4107109 C1